Europäisches Patentamt

European Patent Office

Office européen des brevets

(11) Publication number: 0 402 327
A1

## EUROPEAN PATENT APPLICATION

(21) Application number: 90830244.1

(22) Date of filing: 31.05.90

(51) Int. Cl.5: B60B 11/10

(30) Priority: 08.06.89 IT 944789

(43) Date of publication of application:
12.12.90 Bulletin 90/50

(84) Designated Contracting States:
DE FR GB SE

(71) Applicant: Previti, Pietro
Via Lazio, Isolato 32, No. 53
I-98100 Messina(IT)

Applicant: Previti, Stefano
Via Lazio, Isolato 32, No. 9
I-98100 Messina(IT)

Applicant: Previti, Marcello
Via Lazio, Isolato 32, No. 9
I-98100 Messina(IT)

(72) Inventor: Previti, Pietro
Via Lazio, Isolato 32 No. 53
I-98100 Messina(IT)

(74) Representative: Mannucci, Gianfranco,
Dott.-Ing.
Ufficio Tecnico Ing. A. Mannucci Via della
Scala 4
I-50123 Firenze(IT)

(54) Safety device for wheels with tyres.

(57) The safety device has a toroid-developed seat (5) which is coaxial to the wheel (1,3) and rigidly connected thereto, wherein a casing (7) or similar binding is engaged. The outer diameter of said casing (7) is greater than the outer diameter of the rim (1) and less than the outer diameter of the tyre (3) of the wheel.

Fig.1

EP 0 402 327 A1

## SAFETY DEVICE FOR WHEELS WITH TYRES

The invention refers to wheels for cars, motor vehicles, or any other kind of vehicles in general, which are provided with tyre.

It is known that the burst or punture of a tyre, especially of a steering wheel on a car or motor vehicle, involves serious risks of side-skid, most of all when the burst takes place at high speed, for example, on a motorway, and/or with the vehicle being fully loaded. Moreover, driving with a tyre destroyed by a burst is extremely uncomfortable and implies the risk of damaging the wheel rim, so that the motion of the vehicle after the tyre explosion or puncturing must be avoided or, anyway reduced as far as possible to stop the vehicle in a location suitable for the replacement of the damaged wheel.

The object of the invention is a device which overcomes the above mentioned drawbacks and which, in particular, increases the safety of the car or motor vehicle to a remarkable degree.

Substantially, the device according to the invention is characterized by a toroid-developed seat coaxial to the wheel and rigidly connected thereto, wherein a casing or similar binding is engaged, the outer diameter of said casing being suitably greater than the outer diameter of the rim and less than the outer diameter of the tyre. The seat and the relevant casing make up a small wheel coaxial to the very wheel, sideways disposed to the latter, which is able to timely intervene when the tyre bursts or becomes damaged or inflated. In this case, the casing forms an auxiliary support for the vehicle, thus limiting the inclination thereof (when the damaged wheel is borne by an axle with two wheels). By weighing down on the small wheel, the vehicle is prevented from suddenly side-slipping while allowing the continuation of the drive under safe conditions, even if at reduced speed, and avoiding damages to the tyre which is not squeezed between the rim and the ground.

In practice, owing to its limited cross-section and its emergency function, the casing may be made of solid material, or with a hollow, non pressurized section. In this second case, the major squeezing deformation due to the vehicle weight on the casing when the latter comes in contact with the ground provides a contact region of greater extension.

In a possible embodiment, the seat for the casing making up the small wheel may be formed along an edge of the rim, and thus integral therewith. It is also possible, however, to provide for a small wheel able to be removed for an impromptu assembly thereof even on rims of common type. In this case, the seat is made up, for example, of an axially symmetrical element able to be coaxially engaged to the wheel rim.

The seat with the relevant casing making up the small wheel may be applied on one or the other of the wheel sides. This brings about different effects when the vehicles are of four-wheel type, while making almost no difference in case of motor-cycles. In the case of cars, the assembly on the internal side makes the small wheel completely invisible, while the assembly on the external side provides a dynamic advantage in case of intervention by the small wheel following a damage of the vehicle, as the distance between the two points of support of the coaxial wheels is increased. Moreover, the small wheel on the outer side may perform a protective function to the boss or cup of the relevant wheel. In this case, it may be suitable to provide the casing with a circumferential lip which protects the seat on which it is mounted.

The invention will be better understood by following the description and the attached drawing, which shows a practical, non limiting example of the invention. In the drawing:

Fig. 1 shows a diametral, partial section of a wheel with the device according to the invention;

Fig. 2 shows a modified embodiment of the device according to the invention; and

Fig. 3 shows a further modified embodiment.

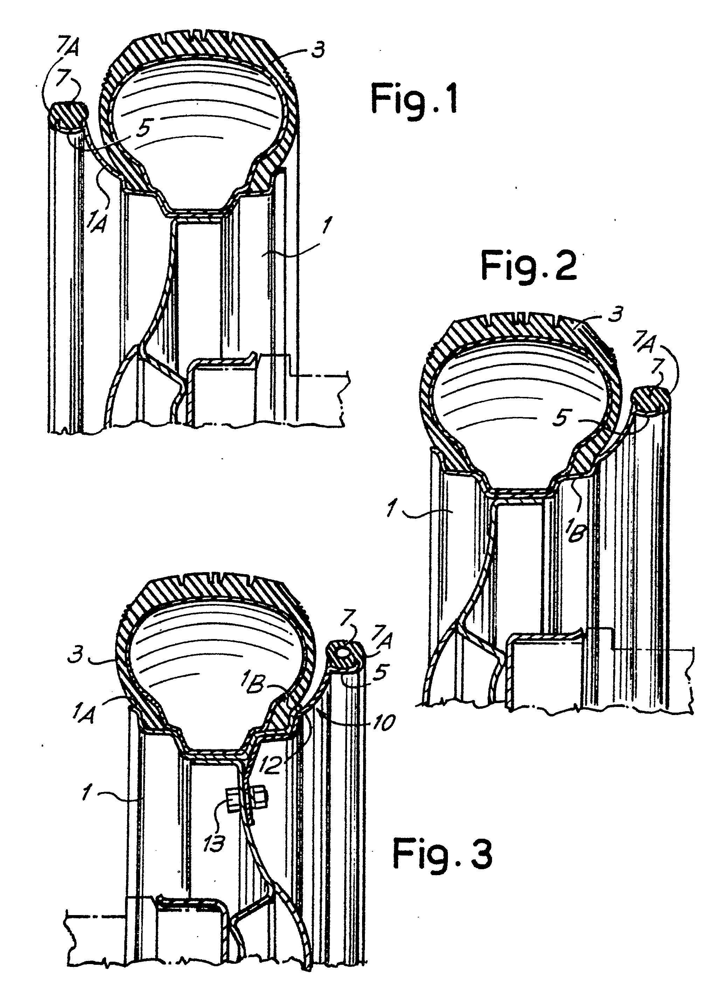

According to what is illustrated in the attached drawing and with initial reference to Fig. 1, numeral 1 indicates a rim of a wheel for car or motor vehicle in general on which rim there is mounted a tyre 3 in a usual manner. One of the rim edges, the external one indicated by 1A in the case of Fig. 1, is radially and laterally extended to form a seat 5 for a casing 7 made of solid rubber. The seat 5 and the casing 7 form a small wheel coaxial to very wheel formed by the rim 1 and the tyre 3 and disposed sideways thereof. As shown in the schematic drawing, the small wheel has an outer diameter ranging between the outer diameter of the tyre 3 and the outer diameter of the rim 1. Moreover, the small wheel is slightly spaced from the flank of the tyre. By this disposition, under normal driving conditions, the small wheel does not affect the function of the very wheel 1, 3. In fact, the distance between the tyre side and the small wheel allows the deformation (deflection) of the tyre due to both the static effects of the load, and to the dynamic effects (misalignment of the tyre on a curve). The difference between the outer diameter of the casing 7 and the outer diameter of the tyre 3 allows also radial deformations, both static and dynamic, of the tyre 3. If, vice versa, the tyre 3 bursts out or becomes damaged and thus inflated, the vehicle weighs down on the lateral small wheel formed by the edge 1A of the rim 1, the seat 5 and the solid tyre 7. Since the outer diameter of the small wheel is greater than the outer diameter of the rim, the running of the vehicle may proceed quite regularly even after the damage of the tyre 3, being only slightly affected by said damage. In particular, the risks of side-slips are reduced.In addition, the solid casing 7 allows a safer and less uncomfortable drive than the one occurring with the rim 1 being directly in contact with road surface (in case of full distruction of the tyre) or with the same rim 1 rolling along with the tyre completely deflected. Also the mechanical damages are reduced and virtually eliminated, though allowing the running of the vehicle (at reduced speed) to reach a parking or service area.

Fig. 2 shows a solution equivalent to that of Fig. 1, wherein equal or corresponding parts are indicated by the same reference number in the two figures. The only modification with respect to the embodiment of Fig. 1 consists in the fact that, in this case, the small wheel is formed on the internal edge, indicated by 1B, of the rim 1.

Fig. 3 shows a solution wherein the small wheel is provided as an element separated from the rim. In this case, the rim 1 has two edges 1A and 1B having usual shape; it is thus a normal rim of traditional type for the assembly of a tyre 3. Removably applied to the rim is a small wheel generically indicated by 10 and made up of an element 12 having toroidal development, capable of being engaged by screw means 13 to the rim 1 or directly to the hub. The portion of larger diameter of said toroidal element 10 forms the seat 5 for the casing 7 which, in this case, is shown hollow instead of solid. The functioning of the device in this embodiment is similar to what has been described with reference to Figs. 1 and 2. The element 10 may be applied outside or inside and may be used in combination with rims of usual shape. It may be easily removed in any moment without withdrawing the wheel, provided it is applied on the external side thereof.

The structure forming the small wheel may be constructed in stamped plate of one piece with the rim, or separate therefrom; it is also possible to provide a construction in reinforced resin or other suitable metal or non metal material, either equal or different from the material the rim is made of.

It is understood that the drawing shows an exemplification given only as a practical demonstration of the invention, as this may vary in the forms and dispositions without nevertheless coming out from the scope of the idea on which the same invention is based. The possible presence of reference numbers in the attached claims has the purpose to facilitate the reading of the claims reference being made to the description and the drawing, and does not limit the scope of the protection represented by the claims.

## Claims

1. Safety device for wheels of vehicles and, in particular, motor vehicles, provided with tyre, characterized by a toroid-developed seat (5) coaxial to the wheel and rigidly connected thereto, wherein a casing (7) or similar binding is engaged, the outer diameter of said casing being suitably greater than the outer diameter of the rim and less than the outer diameter of the tyre.

2. Device according to claim 1, characterized in that said seat (5) is spaced from the side of the tyre (3) to allow static and dynamic deformations of the same tyre.

3. Device according to claim 1 or 2, characterized in that said casing (7) is solid.

4. Device according to claim 1 or 2, characterized in that said casing (7) has a hollow non pressurized section.

5. Device according to one or more preceding claims, characterized in that said seat (5) is formed along an edge (1A, 1B) of the rim.

6. Device according to one or more claims 1 to 4, characterized in that said seat (5) is constructed on an axially symmetrical element (10) able to be engaged to the rim (1) of the wheel.

7. Device according to one or more preceding claims, characterized in that said seat (5) and said casing (7) are applied on the external side of the wheel with respect to the vehicle.

8. Device according to one or more preceding claims, characterized in that said casing has a covering lip (7A) for the front protection of said seat (5).

9. Device according to one or more claims 1 to 7, characterized in that said seat (5) and said casing (7) are applied on the internal side of the wheel with respect to the vehicle.

EP 0 402 327 A1

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3326011 (BACHERT)<br>* page 6, line 20 - page 8, line 22; figure 1 * | 1, 2, 3, 6, 7+ | B60B11/10 |
| X | BE-A-348708 (MULLER)<br>* page 2, line 11 - page 3, line 9; figures 1, 2 * | 1, 2, 4, 5, 6, 7, 9 | |
| X | GB-A-2133751 (CHANG)<br>* page 1, lines 63 - 91; figures 1, 2 * | 1, 2, 3, 6, 7, 8 | |
| X | FR-A-974878 (PIETRACCI)<br>* page 1, left-hand column, line 30 - right-hand column, line 39; figures 1-4 * | 1, 2, 3, 5, 6, 9 | |
| X | US-A-2682431 (DOVBERG)<br>* column 1, line 60 - column 2, line 59; figures 1, 3 * | 1, 2, 3, 5, 7, 9 | |
| X | US-A-1361321 (GOVE)<br>* the whole document * | 1, 3, 6, 7 | |
| X | GB-A-371955 (STIRLING)<br>* page 1, line 51 - page 2, line 9; figures 1, 2 * | 1, 2, 3, 6, 7, 9 | **TECHNICAL FIELDS SEARCHED (Int. Cl.5)**<br><br>B60B |

The present search report has been drawn up for all claims

| Place of search | Date of completion of the search | Examiner |
|---|---|---|
| THE HAGUE | 03 SEPTEMBER 1990 | AYITER I. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
   ...............................................................................
& : member of the same patent family, corresponding
   document

EPO FORM 1503 03.82 (P0401)